# FASCICULE DE BREVET EUROPEEN

(11) **EP 3 381 115 B1**
(45) Date de publication et mention de la délivrance du brevet: **08.09.2021**
(21) Numéro de dépôt: 16819334.0
(22) Date de dépôt: 22.11.2016
(51) Int. Cl.: H02M 7/06, H01F 30/02, H02M 7/08

(54) **CONVERTISSEUR ALTERNATIF/CONTINU À STRUCTURE IMBRIQUÉE**
AC/DC-WANDLER MIT VERSCHACHTELTER STRUKTUR
AC-DC CONVERTER WITH NESTED STRUCTURE

(30) Priorité: 23.11.2015 FR 1561245
(43) Date de publication de la demande: 03.10.2018
(73) Titulaire: Safran Electrical & Power, 31702 Blagnac Cedex (FR)
(72) Inventeur: DHOKKAR, Sonia, 91800 Brunoy (FR); LE CAM, Lucie, 91700 Sainte Genevieve des Bois (FR)
(74) Mandataire: Cabinet Beau de Loménie
(86) Numéro de dépôt international: PCT/FR2016/053040
(87) Numéro de publication internationale: WO 2017/089691

(56) Documents cités:
- WO-A1-2013/167829
- CN-Y- 2 323 461
- US-B1- 8 737 097

## Description

### Arrière-plan de l'invention

L'invention se rapporte au domaine général des convertisseurs alternatifs/continus, en particulier les convertisseurs alternatifs/continus équipés d'autotransformateurs.

L'invention s'applique plus particulièrement aux convertisseurs destinés à recevoir une tension alternative ayant une fréquence variable (par exemple comprise entre 360Hz et 800Hz) et pouvant être issue d'un réseau d'alimentation électrique d'aéronef. De tels réseaux présentent généralement des tensions de fonctionnement normal comprises entre 96 volts efficace et 180 volts efficaces.

Pour traiter les tensions issues de ces réseaux, on utilise des convertisseurs qui comportent un autotransformateur, généralement un autotransformateur 12 pulsations (« 12-pulses » en langue anglaise). Un tel autotransformateur produit deux sous-réseaux électriques respectivement déphasés de +15° et -15° par rapport au réseau initial d'entrée de l'autotransformateur.

Les convertisseurs comportent également des ponts redresseurs à diode qui redressent ces deux sous-réseaux. Les sorties de ces deux sous-réseaux sont ensuite connectés à des bobines à noyaux de fer et à point milieu. Ces bobines sont généralement désignées par l'homme par la dénomination « self d'interphase » et elles assurent un lissage, et l'on obtient en sortie de ces bobines la tension redressée voulue (avec ici un indice de pulsation de 12).

Ces convertisseurs fonctionnent sans commande externe, ils peuvent être adaptés pour fonctionner avec des autotransformateurs 18 ou 24 puises, leur coût est faible, et ils fonctionnent même en cas de modification de la charge.

Dans un autotransformateur selon la technique antérieure, par exemple un autotransformateur à 12 pulsations, l'autotransformateur comporte un enroulement primaire connecté en triangle et deux enroulements secondaires connectés en étoile.

Les enroulements d'un autotransformateur sont montés sur trois colonnes dans une structure connue de l'homme du métier comme étant une structure en « E ». Cette structure n'est pas satisfaisante car trop volumineuse.

Dans les réseaux tels que les réseaux d'alimentation électrique d'aéronef, on peut observer un phénomène de déséquilibre de tension (« voltage unbalance » en langue anglaise). Ceci conduit à une saturation désavantageuse des éléments magnétiques de l'autotransformateur.

Un autre inconvénient de ces solutions est la nécessité d'utiliser des selfs d'interphase. Ces éléments sont particulièrement volumineux.

Aussi, les deux ponts à diodes sont destinés à fonctionner en parallèle de manière à produire des courants identiques, et une différence entre ces courants produit un courant de circulation dont la fréquence est de trois fois la fréquence du réseau d'alimentation électrique initial. Ce courant de circulation croit donc avec la fréquence de ce réseau et cela influe directement sur les inductances des selfs d'interphase (qui augmentent avec la fréquence).

Ces courants de circulation ont un effet sur les harmoniques de rang 5, 7, 17 ou 19, et il est nécessaire de bien contrôler ces harmoniques, et cela est notamment fait en dimensionnant à cet effet les selfs d'interphase.

De l'état de la technique antérieure, on connaît le document FR 2 864 372 qui décrit une structure telle que décrite ci-dessus. Dans ce document, il est proposé de générer un flux magnétique supplémentaire au niveau de la self d'interphase pour y intégrer une self de lissage.

Le document US8738097 B1 décrit un convertisseur ayant un autotransformateur.

La présente invention vise notamment à palier certains de ces inconvénients, et notamment d'offrir une structure moins volumineuse.

### Objet et résumé de l'invention

La présente invention répond à ce besoin en proposant un convertisseur alternatif/continu comportant un autotransformateur ayant un enroulement primaire connecté en triangle et deux enroulements secondaires connectés en étoile, les deux enroulements secondaires étant connectés à un étage redresseur.

Selon une caractéristique générale de ce convertisseur, les enroulements de l'autotransformateur sont disposés dans des encoches formées autour de dents intérieures d'un support cylindrique en forme de stator de machine électrique avec une structure de bobinage imbriquée.

Ainsi, les enroulements de l'autotransformateur ne sont pas disposés sur une structure en « E » bien connue de l'homme du métier, mais sur les dents intérieures d'une structure imbriquée de type stator de machine électrique. Ceci permet de réduire l'encombrement de l'autotransformateur et donc du convertisseur.

En outre, il est possible de disposer les enroulements dans une structure de stator de machine électrique avec plus de liberté que sur la structure en « E », et de ce fait on a la possibilité de former des bobinages plus complexes aboutissant notamment à un meilleur filtrage (par exemple par couplage magnétique).

On peut noter qu'un meilleur filtrage peut permettre d'utiliser une self d'interphase moins volumineux.

Selon un mode particulier de réalisation, l'autotransformateur est un autotransformateur hexaphasé ayant trois phases en entrée, chaque phase d'entrée étant associée à un enroulement dudit enroulement primaire et chacune des six phases de sortie de l'autotransformateur étant associée à un enroulement desdits enroulements secondaires, lesdites phases de sorties correspondant par paires aux phases d'entrée.

Selon un mode particulier de réalisation, ledit enroulement primaire est disposé dans des premières portions de chaque encoche disposées vers l'intérieur du support, lesdits enroulements secondaires sont disposés dans des deuxièmes portions de chaque encoche disposées vers l'extérieur du support et, dans chaque encoche, la première portion est séparée axialement de la deuxième portion par une couche d'un matériau isolant.

Le support étant cylindrique, par vers l'intérieur on entend vers le centre du cylindre.

Selon un mode particulier de réalisation, le support comporte un nombre d'encoches égal à 24.

Les inventeurs ont observé qu'avec un nombre d'encoche égal à 24, on obtient un bobinage plus optimisé permettant d'obtenir un meilleur filtrage. En particulier, ceci permet de mieux traiter le phénomène d'« unbalance », puisqu'il y a une répartition du flux magnétique avantageuse grâce aux encoches et à la structure de bobinage imbriquée.

Selon un mode particulier de réalisation, les enroulements de chaque phase d'entrée sont disposés en deux groupes de quatre encoches consécutives, chaque groupe de quatre encoches étant entouré par des groupes d'encoches comportant des enroulements de phases d'entrées différentes. Ces groupes de quatre encoches sont disposés vers l'intérieur du support dans les premières portions.

Selon un mode particulier de réalisation, les enroulements des paires de phases de sorties sont imbriquées dans lesdites deuxièmes portions de sorte que chaque deuxième portion comporte des enroulements de deux phases de sortie appartenant à la même paire ou à deux paires différentes de phases de sorties.

Selon un mode particulier de réalisation, pour chaque première dent du support et pour chaque deuxième dent du support adjacente à la première, un même enroulement d'une première phase est disposé de part et d'autre de la première dent pour occuper les premières portions d'encoches disposées de part et d'autre de la première dent, et deux enroulements d'une deuxième phase sont disposés de part et d'autre de la deuxième dent pour occuper les deuxièmes portions d'encoches disposées de part et d'autre de la deuxième dent.

Il y a donc un décalage d'une encoche entre l'enroulement primaire et les enroulements secondaires.

Selon un mode particulier de réalisation, le support comporte du fer-cobalt.

Ce matériau est choisi pour son niveau de saturation à haute induction et pour ces bonnes propriétés magnétiques en fonction de la fréquence.

Selon un mode particulier de réalisation, l'étage redresseur comporte, pour chaque paire de phases de sortie, deux branches pont de redressement à diodes recevant chacune une phase, les deux branches étant connectées ensemble.

On obtient ainsi un redresseur imbriqué qui redresse les deux sous-réseaux obtenus en sortie de l'autotransformateur. Les inventeurs ont observé que la structure du convertisseur de puissance telle que définie ci-avant et la répartition des bobinages secondaires de l'autotransformateur permettent d'utiliser une self d'interphase moins volumineuse voire de ne pas en utiliser du tout.

On peut noter que la structure de l'autotransformateur telle que proposée ci-dessus permet d'obtenir un lissage pour éviter l'apparition d'effets indésirables liés à la répartition des bobinages secondaires. La répartition des bobinages dans les 24 encoches (selon un mode particulier de réalisation) est faite de sorte à obtenir un flux magnétique le plus homogène possible dans le circuit magnétique.

Cette structure diffère de celle utilisée dans l'art antérieur dans lesquelles on utilise deux ponts distincts.

On peut également noter qu'une branche de pont de redressement à diode comporte deux diodes connectées en série avec la cathode de l'une reliée à l'anode de l'autre en un point milieu, et une telle branche reçoit le signal à redresser en ce point milieu.

Selon un mode particulier de réalisation, pour chaque paire de phases de sortie, lesdites deux branches sont connectées ensemble à l'anode d'une première diode, et les cathodes de toutes les premières diodes de chaque paires sont connectés ensemble pour former une première sortie de l'étage redresseur, lesdites deux branches étant en outre connectés ensemble à la cathode d'une deuxième diode, et les anodes de toutes les deuxièmes diodes de chaque paires sont connectés ensemble pour former une deuxième sortie de l'étage redresseur.

Il est également proposé un système comportant un convertisseur alternatif/continu tel que défini ci-avant et une charge alimentée par ledit convertisseur, ladite charge étant directement connectée audit étage redresseur.

### Brève description des dessins

D'autres caractéristiques et avantages de la présente invention ressortiront de la description faite ci-dessous, en référence aux dessins annexés qui en illustrent un exemple dépourvu de tout caractère limitatif.

Sur les figures :
- la figure 1 représente de façon schématique un système comportant un convertisseur selon un mode de réalisation de l'invention
- la figure 2 représente de manière schématique la structure de l'autotransformateur selon un mode de réalisation de l'invention,
- la figure 3 représente de manière schématique un exemple de disposition des enroulements d'un autotransformateur selon l'invention,
- la figure 4 représente un étage redresseur, et
- la figure 5 est un chronogramme associé à l'étage redresseur.

### Description détaillée d'un mode de réalisation

Nous allons maintenant décrire un système comportant un convertisseur à autotransformateur, par exemple un convertisseur destinés à recevoir une tension alternative ayant une fréquence variable (par exemple comprise entre 360Hz et 800Hz) et issue d'un réseau d'alimentation électrique d'aéronef.

Sur les figures, les mêmes références sont utilisées pour désigner les mêmes éléments ou des éléments analogues.

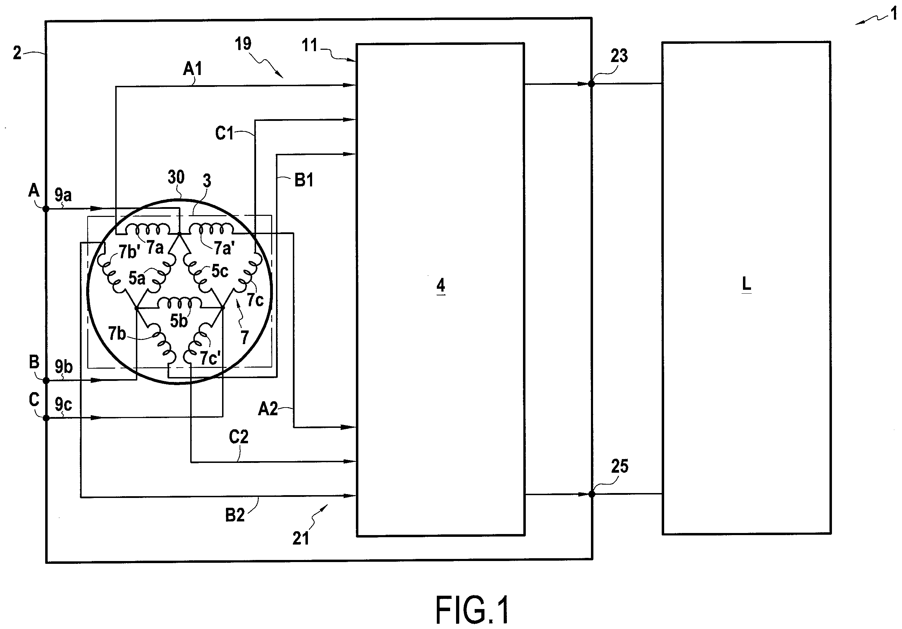

Sur la figure 1, on a représenté un système 1 comprenant un convertisseur 2 muni d'un autotransformateur 3 et d'un étage redresseur 4.

Comme on peut le voir sur cette figure, aucune self d'interphase n'est utilisée dans le convertisseur de la figure 1.

Le convertisseur 2 reçoit en entrée un réseau triphasé ayant trois phases A, B et C qui sont respectivement fournies par des connexions 9a, 9b et 9c à l'autotransformateur 3. Ici, l'autotransformateur 3 est un autotransformateur hexaphasé. L'autotransformateur 3 comporte un enroulement primaire 5 connecté en triangle et deux enroulements secondaires 7 connectés en étoile.

Plus précisément, l'enroulement primaire 1 comprend les enroulements 5a, 5b et 5c qui sont respectivement associés aux phases A, B et C. Les enroulements secondaires comprennent six enroulements, ou trois paires d'enroulements : 7a et 7a' associés à la phase A, 7b et 7b' associés à la phase B, et 7c et 7c' associés à la phase C.

Les enroulements des enroulements secondaires sont tous reliés d'une part à l'enroulement primaire en triangle et d'autre part aux sorties de l'autotransformateur A1 et A2 (correspondant à la phase d'entrée A), B1 et B2(correspondant à la phase d'entrée B), et C1 et C2 (correspondant à la phase d'entrée C). Par abus de langage et pour des raisons de simplification, dans la présente demande, on désigne par A1, A2, B1, B2, C1, C2 à la fois les sorties de l'autotransformateur et les phases de sortie de l'autotransformateur. Les phases de sorties de l'autotransformateur A1, A2, B1, B2, C1, C2 sont fournies au redresseur.

Aussi, on peut noter que les phases A1, B1 et C1 forment un sous-réseau 19 de phases décalées de 120°, et les phases A2, B2 et C2 forment un autre sous-réseau 21 de phases décalées de 120°. Ici, les six phases sont décalées de 60° chacune (entre A1 et A2, B1 et B2, et C1 et C2).

Contrairement aux autotransformateurs selon la technique antérieure, les enroulements primaires et secondaires de l'autotransformateur 3 sont ici disposés dans des encoches formées autour de dents intérieures d'un support cylindrique 30 en forme de stator de machine électrique, par exemple un stator de machine asynchrone bien connu de l'homme du métier.

L'étage redresseur reçoit les phases A1, A2, B1, B2, C1 et C2 puis il redresse ces phases pour fournir dans ses sorties 23 et 25 la tension continue souhaitée. Les sorties 23 et 25 coïncident ici avec les sorties du convertisseur : ces sorties sont reliées directement avec les sorties du convertisseur, sans self d'interphase.

Les sorties 23 et 25 sont aussi connectées à une charge L qui peut comporter un onduleur alimentant lui-même une machine électrique.

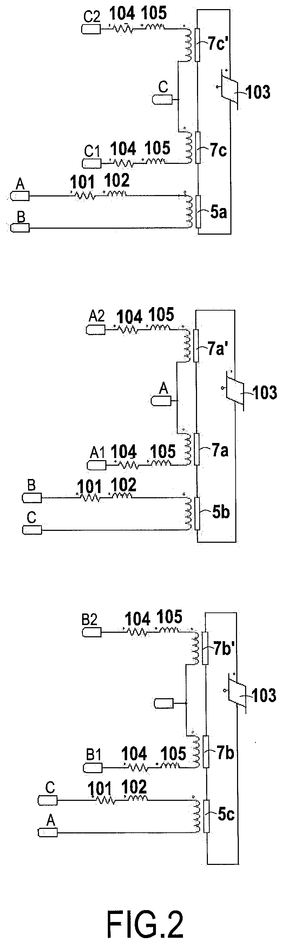

Sur la figure 2, on a représenté de manière schématique la structure de l'autotransformateur de la figure 1, en séparant pour plus de clarté les schémas électriques correspondant à chacune des phases d'entrée A, B ou C.

Le schéma électrique disposé au milieu sur la figure 2 correspond aux enroulements associés à la phase d'entrée B.

L'enroulement du primaire référencé 5b sur la figure 1 reçoit à ses bornes les phases B et C, et sur la figure, on a également représenté les composants parasites tels qu'une résistance 101 et une bobine 102 (inductance de fuite de l'enroulement 5b). En regard de l'enroulement 5b et pour former un transformateur, les enroulements 7a et 7a' sont disposés sur le même corps magnétique. Sur la figure, on a également représenté les composants parasites liés aux enroulements 7a et 7a' que sont les résistantes 104 et les inductances de fuite 105.

La phase A est connectée entre les enroulements 7a et 7a' qui sont respectivement connectés aux phases de sortie A1 et A2.

Le corps magnétique Fer-Cobalt et sa saturation sont illustrés sur la figure par le corps 103.

Le schéma électrique disposé en bas sur la figure correspond aux enroulements associés à la phase d'entrée C.

L'enroulement du primaire référencé 5c sur la figure 1 reçoit à ses bornes les phases A et C (les éléments parasites ont également été représentés). En regard de l'enroulement 5c et pour former un transformateur, les enroulements 7b et 7b' sont disposés sur le même corps magnétique. Sur la figure, on a également représenté les composants parasites liés aux enroulements 7b et 7b'.

La phase B est connectée entre les enroulements 7b et 7b' qui sont respectivement connectés aux phases de sortie B1 et B2.

L'enroulement primaire référencé 5a correspond aux enroulements associés à la phase d'entrée A (schéma disposé en haut sur la figure).

L'enroulement du primaire référencé 5a reçoit à ses bornes les phases A et B (les éléments parasites ont également été représentés), En regard de l'enroulement 5a et pour former un transformateur, les enroulements 7c et 7c' sont disposés sur le même corps magnétique. Sur la figure, on a également représenté les composants parasites liés aux enroulements 7c et 7c'.

La phase C est connectée entre les enroulements 7c et 7c' qui sont respectivement connectés aux phases de sortie C1 et C2.

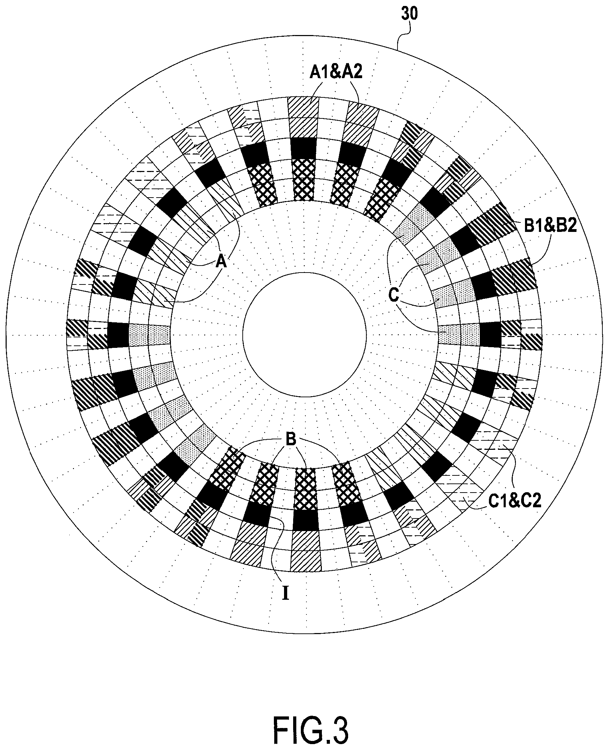

Sur la figure 3, on a représenté la disposition des enroulements de l'autotransformateur sur le support cylindrique 30.

Sur cette figure, et pour plus de clarté, on a utilisé les références des phases pour désigner les enroulements correspondant.

Le support 30 comporte ici 24 encoches, et ici, l'enroulement primaire est disposé dans des premières portions de chaque encoche disposées vers l'intérieur du support, c'est-à-dire les portions les plus proches du centre du cylindre. L'enroulement primaire est désigné par les phases A, B et C sur la figure, et ces phases correspondent respectivement aux enroulements 5a, 5b et 5c en reprenant la notation de la figure 1.

Les enroulements secondaires sont disposés dans des deuxièmes portions de chaque encoche disposées vers l'extérieur du support, c'est-à-dire les portions les plus éloignées du centre du cylindre. Les enroulements secondaires sont désignés par les phases A1, A2, B1, B2, C1 et C2, et ces phases correspondent respectivement aux enroulements 7a, 7a', 7b, 7b', 7c, et 7c' en reprenant la notation de la figure 1.

Les premières portions et les deuxièmes portions sont séparées axialement par une couche d'un matériau isolant I.

Ici, les enroulements de chaque phase d'entrée sont disposés en deux groupes de quatre encoches consécutives, chaque groupe de quatre encoches étant entouré par des groupes d'encoches comportant des enroulements de phases d'entrées différentes.

Aussi, les enroulements des paires de phases de sorties A1, A2, B1, B2, C1, et C2 sont imbriquées dans lesdites deuxièmes portions de sorte que chaque deuxième portion comporte des enroulements de deux phases de sortie appartenant à la même paire ou à deux paires différentes de phases de sorties.

Enfin, pour chaque première dent du support et pour chaque deuxième dent du support adjacente à la première, un même enroulement d'une première phase est disposé de part et d'autre de la première dent pour occuper les premières portions d'encoches disposées de part et d'autre de la première dent, et deux enroulements d'une deuxième phase sont disposés de part et d'autre de la deuxième dent pour occuper les deuxièmes portions d'encoches disposées de part et d'autre de la deuxième dent.

La structure présentée sur la figure 3 permet d'obtenir un lissage intrinsèque à l'autotransformateur, ce qui permet d'utiliser une self d'interphase moins volumineuse. On peut notamment noter que cette structure peut être réalisée de manière à conserver la même quantité de section d'enroulement ou de section de circuit magnétique que pour une structure à trois colonnes classique selon l'art antérieur.

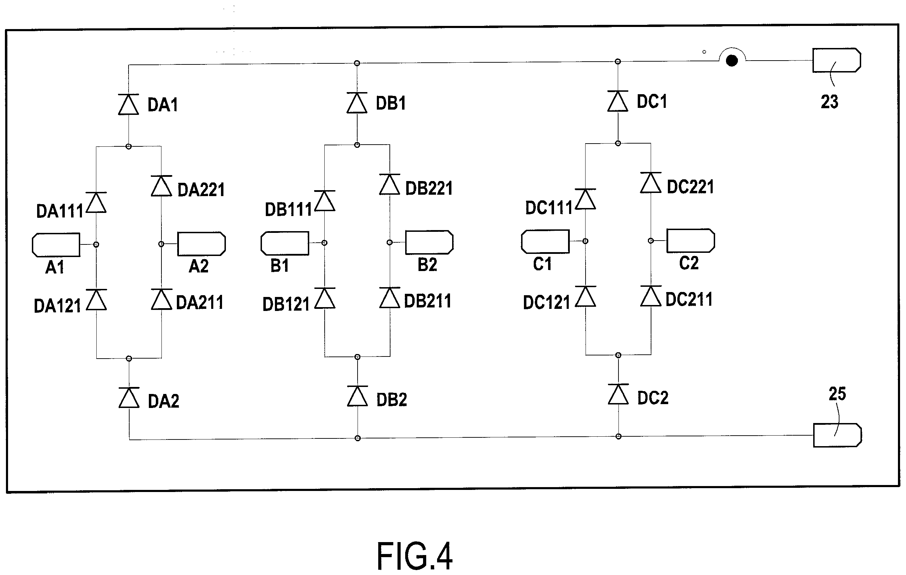

Sur la figure 4, on a représenté un exemple d'étage redresseur selon un mode de réalisation de l'invention.

Les entrées de cet étage redresseur sont les phases A1, A2, B1, B2, C1 et C2.

Pour la paire de phases A1/A2, l'étage redresseur comporte deux branches de pont de redressement à diodes recevant chacune une des deux phases, et ces branches sont connectées ensemble.

Plus précisément, la phase A1 est connectée au point milieu entre une diode DA121 et une diode DA111, la cathode de la diode DA121 étant connectée à l'anode de la diode DA111. La phase A2 est connectée de la même manière entre les diodes DA211 et DA221.

Les cathodes des diodes DA111 et DA221 sont connectées ensemble à l'anode d'une première diode DA1. Les anodes des diodes DA121 et DA211 sont connectées ensemble à la cathode d'une deuxième diode DA2.

De la même manière, la phase B1 est connectée au point milieu entre une diode DB121 et une diode DB111, la cathode de la diode DB121 étant connectée à l'anode de la diode DB111. La phase B2 est connectée de la même manière entre les diodes DB211 et DB221.

Les cathodes des diodes DB111 et DB221 sont connectées ensemble à l'anode d'une première diode DB1. Les anodes des diodes DB121 et DB211 sont connectées ensemble à la cathode d'une deuxième diode DB2.

Enfin, la phase C1 est connectée au point milieu entre une diode DC121 et une diode DC111, la cathode de la diode DC121 étant connectée à l'anode de la diode DC111. La phase C2 est connectée de la même manière entre les diodes DC211 et DC221.

Les cathodes des diodes DC111 et DC221 sont connectées ensemble à l'anode d'une première diode DC1. Les anodes des diodes DC121 et DC211 sont connectées ensemble à la cathode d'une deuxième diode DC2.

Les cathodes de toutes les premières diodes DA1, DB1 et DC1 sont connectées ensemble à la sortie 23 de l'étage redresseur.

Les anodes de toutes les deuxièmes diodes DA2, DB2 et DC2 sont connectées ensemble à la sortie 25 de l'étage redresseur.

On peut noter qu'ici il y a un déphasage de 60° entre les paires de chaque phase, et il y a également un déphasage au niveau de chaque première diode ou deuxième diode.

Aussi, les premières diodes et les deuxièmes diodes assurent l'imbrication des deux phases en ajoutant une couche supplémentaire de redressement, ce qui permet d'obtenir une structure vue de la sortie analogue à un unique pont de redressement : on évite ainsi les inconvénients des solutions selon la technique antérieure dans lesquelles des courants de circulation apparaissent. De ce fait, cette solution permet d'utiliser une self d'interphase moins volumineuse voire pas de self d'interphase.

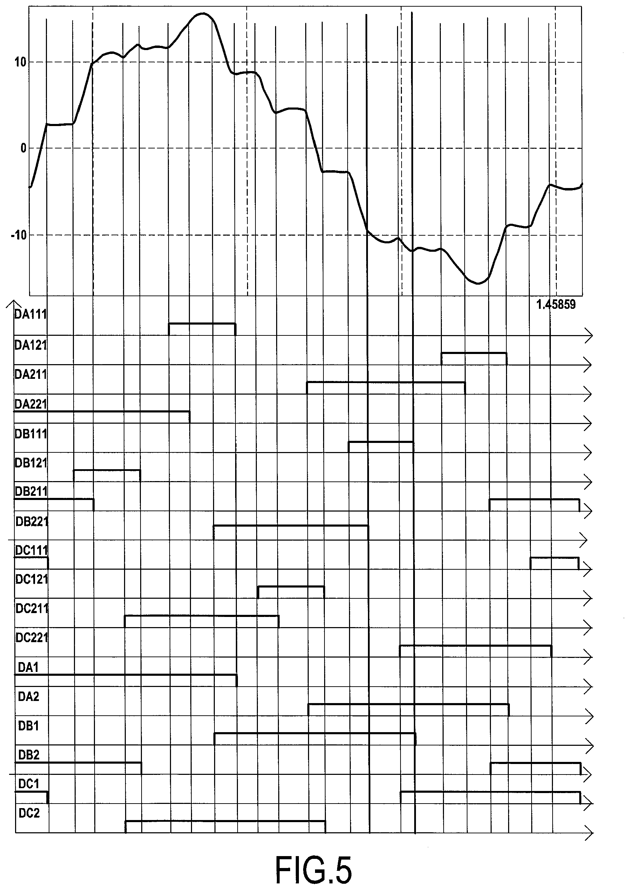

Sur la figure 5, on a représenté les états de conductions de chacune des diodes et, sur le graphique dans la partie supérieure de l'image, le courant circulant dans la phase A.

On peut noter que l'invention permet d'obtenir un convertisseur moins volumineux puisque permettant de diminuer le volume de la self d'interphase voire de ne pas en utiliser tout en conservant un même comportement électrique.

L'invention permet donc d'obtenir un convertisseur avec un facteur de forme plus avantageux et avec un meilleur niveau d'intégration. Ceci permet de réduire le volume et la masse d'un convertisseur.

## Revendications

1. Convertisseur alternatif/continu comportant un autotransformateur (3) ayant un enroulement primaire (5) connecté en triangle et deux enroulements secondaires (7) connectés en étoile, les deux enroulements secondaires étant connectés à un étage redresseur (4),
**caractérisé en ce que** les enroulements de l'autotransformateur sont disposés dans des encoches formées autour de dents intérieures d'un support cylindrique (30) en forme de stator de machine électrique avec une structure de bobinage imbriquée.

2. Convertisseur selon la revendication 1, dans lequel l'autotransformateur (3) est un autotransformateur hexaphasé ayant trois phases en entrée (A, B, C), chaque phase d'entrée étant associée à un enroulement dudit enroulement primaire et chacune des six phases de sortie (A1, A2, B1, B2, C1, C2) de l'autotransformateur étant associée à un enroulement desdits enroulements secondaires, lesdites phases de sorties correspondant par paires aux phases d'entrée.

3. Convertisseur selon la revendication 1 ou 2, dans lequel ledit enroulement primaire est disposé dans des premières portions de chaque encoche disposées vers l'intérieur du support, lesdits enroulements secondaires sont disposés dans des deuxièmes portions de chaque encoche disposées vers l'extérieur du support et, dans chaque encoche, la première portion est séparée axialement de la deuxième portion par une couche d'un matériau isolant.

4. Convertisseur selon l'une des revendications 1 à 3, dans lequel le support comporte un nombre d'encoches égal à 24.

5. Convertisseur selon la combinaison des revendications 2 à 4, dans lequel les enroulements de chaque phase d'entrée sont disposés en deux groupes de quatre encoches consécutives, chaque groupe de quatre encoches étant entouré par des groupes d'encoches comportant des enroulements de phases d'entrées différentes.

6. Convertisseur selon la revendication 5, dans lequel les enroulements des paires de phases de sorties sont imbriquées dans lesdites deuxièmes portions de sorte que chaque deuxième portion comporte des enroulements de deux phases de sortie appartenant à la même paire ou à deux paires différentes de phases de sorties.

7. Convertisseur selon la revendication 5 ou 6, dans lequel pour chaque première dent du support et pour chaque deuxième dent du support adjacente à la première, un même enroulement d'une première phase est disposé de part et d'autre de la première dent pour occuper les premières portions d'encoches disposées de part et d'autre de la première dent, et deux enroulements d'une deuxième phase sont disposés de part et d'autre de la deuxième dent pour occuper les deuxièmes portions d'encoches disposées de part et d'autre de la deuxième dent.

8. Convertisseur selon l'une des revendications 1 à 4, dans lequel le support comporte du fer-cobalt.

9. Convertisseur selon les revendications 1 et 2, dans lequel l'étage redresseur (4) comporte, pour chaque paire de phases de sortie, deux branches pont de redressement à diodes recevant chacune une phase, les deux branches étant connectées ensemble.

10. Convertisseur selon la revendication 9, dans lequel pour chaque paire de phases de sortie, lesdites deux branches sont connectées ensemble à l'anode d'une première diode, et les cathodes de toutes les premières diodes de chaque paires sont connectés ensemble pour former une première sortie de l'étage redresseur, lesdites deux branches étant en outre connectés ensemble à la cathode d'une deuxième diode, et les anodes de toutes les deuxièmes diodes de chaque paires sont connectés ensemble pour former une deuxième sortie de l'étage redresseur.

11. Système comportant un convertisseur alternatif/continu selon l'une quelconque des revendications 1 à 10 et une charge (L) alimentée par ledit convertisseur, ladite charge étant directement connectée audit étage redresseur (4).

## Patentansprüche

1. AC/DC-Wandler, umfassend einen Spartransformator (3) mit einer Primärwicklung (5) in Dreieckschaltung und zwei Sekundärwicklungen (7) in Sternschaltung, wobei die beiden Sekundärwicklungen mit einer Gleichrichterstufe (4) verbunden sind,
**dadurch gekennzeichnet, dass** die Wicklungen des Spartransformators in Kerben angeordnet sind, welche um Innenzähne eines zylindrischen Trägers (30) in Form eines Stators einer elektrischen Maschine mit einer verschachtelten Wicklungsstruktur ausgebildet sind.

2. Wandler nach Anspruch 1, bei dem der Spartransformator (3) ein sechsphasiger Spartransformator mit drei Eingangsphasen (A, B, C) ist, wobei jede Eingangsphase einer Wicklung der Primärwicklung zugeordnet ist und wobei eine jede der sechs Ausgangsphasen (A1, A2, B1, B2, C1, C2) des Spartransformators einer Wicklung der Sekundärwicklungen zugeordnet ist, wobei die Ausgangsphasen paarweise den Eingangsphasen entsprechen.

3. Wandler nach Anspruch 1 oder 2, bei dem die Primärwicklung in ersten Abschnitten einer jeden Kerbe angeordnet ist, welche zur Innenseite des Trägers hin angeordnet sind, wobei die Sekundärwicklungen in zweiten Abschnitten jeder Kerbe angeordnet sind, welche zur Außenseite des Trägers hin angeordnet sind, und in jeder Kerbe der erste Abschnitt durch eine Schicht aus einem isolierenden Material axial von dem zweiten Abschnitt getrennt ist.

4. Wandler nach einem der Ansprüche 1 bis 3, bei dem der Träger eine Anzahl von Kerben gleich 24 aufweist.

5. Wandler nach der Kombination aus den Ansprüchen 2 bis 4, bei dem die Wicklungen jeder Eingangsphase in zwei Gruppen von vier aufeinanderfolgenden Kerben angeordnet sind, wobei jede Gruppe von vier Kerben von Gruppen von Kerben umgeben ist, die Wicklungen unterschiedlicher Eingangsphasen umfassen.

6. Wandler nach Anspruch 5, bei dem die Wicklungen der Paare von Ausgangsphasen in den zweiten Abschnitten verschachtelt sind, so dass jeder zweite Abschnitt Wicklungen von zwei Ausgangsphasen umfasst, die zu demselben Paar oder zu zwei unterschiedlichen Paaren von Ausgangsphasen gehören.

7. Wandler nach Anspruch 5 oder 6, bei dem für jeden ersten Zahn des Trägers und für jeden dem ersten benachbarten zweiten Zahn des Trägers eine gleiche Wicklung einer ersten Phase auf beiden Seiten des ersten Zahns angeordnet ist, um die ersten Abschnitte von Kerben zu belegen, die auf beiden Seiten des ersten Zahns angeordnet sind, und zwei Wicklungen einer zweiten Phase auf beiden Seiten des zweiten Zahns angeordnet sind, um die zweiten Abschnitte von Kerben zu belegen, die auf beiden Seiten des zweiten Zahns angeordnet sind.

8. Wandler nach einem der Ansprüche 1 bis 4, bei dem der Träger Eisen-Kobalt umfasst.

9. Wandler nach den Ansprüchen 1 und 2, bei dem die Gleichrichterstufe (4) für jedes Paar von Ausgangsphasen zwei Diodengleichrichterbrücken-Zweige umfasst, die jeweils eine Phase aufnehmen, wobei die beiden Zweige zusammengeschaltet sind.

10. Wandler nach Anspruch 9, bei dem für jedes Paar von Ausgangsphasen die beiden Zweige zusammen mit der Anode einer ersten Diode verbunden sind und die Kathoden aller ersten Dioden jedes Paares zusammengeschaltet sind, um einen ersten Ausgang der Gleichrichterstufe zu bilden, wobei die beiden Zweige ferner zusammen mit der Kathode einer zweiten Diode verbunden sind und die Anoden aller zweiten Dioden jedes Paares zusammengeschaltet sind, um einen zweiten Ausgang der Gleichrichterstufe zu bilden.

11. System, umfassend einen AC/DC-Wandler nach einem der Ansprüche 1 bis 10 und eine von dem Wandler gespeiste Last (L), wobei die Last direkt mit der Gleichrichterstufe (4) verbunden ist.

## Claims

1. An AC/DC converter including an autotransformer (3) having a delta-connected primary winding (5) and two star-connected secondary windings (7), the two secondary windings being connected to a rectifier stage (4),
**characterized in that** the windings of the autotransformer are disposed in notches formed around internal teeth of a cylindrical support (30) in the form of an electric machine stator with a nested coil structure.

2. The converter according to claim 1, wherein the autotransformer (3) is a six-phase autotransformer having three phases as inputs (A, B, C), each input phase being associated with a winding of said primary winding and each of the six output phases (A1, A2, B1, B2, C1, C2) of the autotransformer being associated with a winding of said secondary windings, said output phases corresponding in pairs to the input phases.

3. The converter according to claim 1 or 2, wherein said primary winding is disposed in first portions of each notch disposed inwardly of the support, said secondary windings are disposed in second portions of each notch disposed outwardly of the support and, in each notch, the first portion is axially separated from the second portion by a layer of an insulating material.

4. The converter according to any of claims 1 to 3, wherein the support includes a number of notches equal to 24.

5. The converter according to the combination of claims 2 to 4, wherein the windings of each input phase are disposed in two groups of four consecutive notches, each group of four notches being surrounded by groups of notches including windings of different input phases.

6. The converter according to claim 5, wherein the windings of the pairs of output phases are nested in said second portions so that each second portion includes windings of two output phases belonging to the same pair or to two different pairs of output phases.

7. The converter according to claim 5 or 6, wherein for each first tooth of the support and for each second tooth of the support adjacent to the first tooth, the same winding of a first phase is disposed on either side of the first tooth to occupy the first portions of notches disposed on either side of the first tooth, and two windings of a second phase are disposed on either side of the second tooth to occupy the second portions of notches disposed on either side of the second tooth.

8. The converter according to any of claims 1 to 4, wherein the support includes iron-cobalt.

9. The converter according to claims 1 and 2, wherein the rectifier stage (4) includes, for each pair of output phases, two diode rectifier bridge branches each receiving one phase, the two branches being connected together.

10. The converter according to claim 9, wherein for each pair of output phases, said two branches are connected together to the anode of a first diode, and the cathodes of all the first diodes of each pair are connected together to form a first output of the rectifier stage, said two branches being further connected together to the cathode of a second diode, and the anodes of all the second diodes of each pair are connected together to form a second output of the rectifier stage.

11. A system including an AC/DC converter according to any one of claims 1 to 10 and a load (L) supplied by said converter, said load being directly connected to said rectifier stage (4).
